(19)

Europäisches Patentamt

European Patent Office

Office européen des brevets

(11) **EP 2 782 293 B1**

(12) **EUROPEAN PATENT SPECIFICATION**

(45) Date of publication and mention of the grant of the patent:
**01.02.2017 Bulletin 2017/05**

(51) Int Cl.:
***H04L 12/28*** *(2006.01)*

(21) Application number: **13305322.3**

(22) Date of filing: **19.03.2013**

(54) **Method and system for selecting a relay device**

Verfahren und Vorrichtung zur Auswahl einer Relaisvorrichtung

Procédé et système de sélection d'un dispositif relai

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**24.09.2014 Bulletin 2014/39**

(73) Proprietor: **ALCATEL LUCENT
92100 Boulogne-Billancourt (FR)**

(72) Inventor: **Gacanin, Haris
2600 Antwerpen (BE)**

(74) Representative: **ALU Antw Patent Attorneys
Copernicuslaan 50
2018 Antwerpen (BE)**

(56) References cited:
**WO-A2-2007/144836        US-A- 5 029 334
US-A1- 2008 144 512**

**Description**

Technical field

Embodiments of the invention relate to a method and system for selecting a relay device from a plurality of relay devices in a network, typically a home network.

Background

Different standards are available to enable broadband data communication required by in-house broadband applications over power line cables. Examples are HomePlug and International Telecommunication Union (ITU) G.hn standards. The achievable performance with respect to bit error rate, throughput, etc., is typically limited by the size and structure of the in-house network. The home network physical channel mediums are typically powerline, coax, twisted-pairs and wireless. For example in the case of a powerline medium, this medium can be seen as a broadcast channel, where all powerline communication (PLC) devices share the same available network resources. The same or similar considerations apply for other mediums.

Due to size and network topology of the network, the distance between a source node and a destination node may be large. This may produce strong signal attenuations or degradations in the receiver. To address this problem multi-hop communication is used which relies on relay devices between the nodes. The selection of the relays in a multi-hop communication network may be done using a fixed selection (FS) scheme. According to the fixed selection technique, relay devices are selected to divide the source to destination distance approximately evenly regardless of the channel conditions. Also, there exist channel adaptive selection (CAS) schemes using location and local link quality information. Yet another technique uses an automatic repeat/request selection (ARQS) scheme in order to select the node that has successfully decoded the source message first, as the next relay. The techniques used in the prior art have the disadvantage of being complex and not appropriately taking into account the use of the network devices.

US 5029334 A (1991) discloses a process for transferring data packets in a network from a master station to subscriber stations, wherein data routings are selected. Each data routing determines one or more relay subscriber stations to be used for the data packet transfer. The data routings are calculated using a transmission quality level (e.g. the signal-to-noise ratio) recorded at each subscriber station and reported to the master station.

US 2008/144512 A1 discloses a method for selecting a route in wireless cooperative relay networks. The data to be sent is encoded as a data stream by the sender and by potential relay nodes, (preferably) using different codes, along with energy consumption information, to be received as accumulated information at a receiver, that then calculates and selects one (or more parallel) optimal route(s) for further data transmission using feedback information.

Summary

The object of embodiments of the present invention is to provide a method and a system capable of dealing in an efficient and robust way with the selection of a relay device in a network, in particular in a service- and power-constrained home network.

The object is achieved by a method according to claim 1 and a system according to claim 9.

According to the invention there is provided a method for selecting a relay device from a plurality of relay devices in a network. In a first step, for each relay device of the plurality of relay devices, a number of parameters associated with the relay device are obtained. In a second step, an indication of the suitability of the relay device is calculated based on the obtained number of parameters. In a third step, the relay device to be used is selected based on the calculated indications. The method is based on the inventive insight that the selection of the relay device is not only based on physical layer channel/system information, but that it can take into consideration a number of parameters associated with the relay device itself. In the context of the present invention, the term "relay device" refers to an electronic device that is capable of receiving a signal and retransmitting the signal at a higher power level, and/or in an upgraded form. As the invention is in particular useful for home networks, the relay devices will typically be a Customer Premises Equipment (CPE) device, a mobile device, a computer, etc. Such devices typically have many functions, the repeating function being only one of them. Examples of relay devices are for instance a mobile phone, a smart phone, a laptop, a tablet, a set-top box, etc. According to a preferred embodiment, the relay devices report system parameters (such as the data rate, the bit error rate, the power consumption, etc.), and/or a service/ application parameter to a master node. Based on those parameters the master node performs the calculation of the indications for the respective relay devices. A service parameter is a parameter relating to a service offered by the relay device, and an application parameter is a parameter relating to an application associated with the relay device. A service parameter could e.g. indicate whether the relay device is a mobile phone, a laptop or a set-top box.

According to the invention, the number of obtained parameters includes a service parameter indicating the type of the relay device. Based on the type of the relay device, a service priority value is determined for that relay device, and this service priority value is used to calculate the indication for the relay device. In that way, e.g., a higher priority may be given to an application with a higher data rate. For example, in a case where the plurality of relay devices comprise a mobile phone, a laptop and a set-top box, the highest priority will be given to the set-top box, the second highest to the laptop, and the lowest to the mobile phone. However, the skilled person understands that other types of prioritization may be used.

According to another embodiment, for each relay device, a power value representative for the power needed to handle the current data rate is estimated, and this power value is used to calculate the indication for the relay device.

According to a further embodiment, for each relay device, a data rate value representative for the instantaneous consumed data rate is estimated using the obtained number of parameters. This data rate may then be used to calculate the indication for that relay device.

According to yet another embodiment, the obtained number of parameters comprises a bit error rate (BER) parameter, and a probability-of-cooperation value is calculated using the bit error rate parameter. This probability value may then be used to calculate the indication for the relay device. Such a probability-of-cooperation value may be a value indicating the probability that the packet error rate is higher than a predetermined threshold.

Embodiments of the method of the invention may further comprise a fourth step, performed after having selected the relay device to be used, of broadcasting a relay selection message to the plurality of relay devices to indicate the selected relay device.

For completeness it is noted that embodiments of the method of the invention may be used when sending broadband data from a source to a destination. According to a possible embodiment, a source node sends a request blindly to one or more relay devices, and only the relay device selected by the master node and informed of its selection by the master node, is the relay device that responds to the request of the source node. This embodiment could e.g. be used in PLC systems. The skilled person understands that other techniques may be used e.g. in wireless communications. According to another variant, the source node could contact the master node in order to know which relay device(s) to use when sending the data from the source to the destination.

According to the invention, there is also provided a system. The system may further comprise a broadcasting module configured for broadcasting a relay selection message to the plurality of relay devices to indicate the selected relay device. Preferably, the plurality of relay devices is part of a home network. According to preferred embodiments, the calculation and selecting module is configured for performing a calculation according to any of the embodiments disclosed above in relation to the method.

Brief description of the figures

The accompanying drawings are used to illustrate presently preferred non-limiting exemplary embodiments of methods and systems of the present invention. The above and other advantages of the features and objects of the invention will become more apparent and the invention will be better understood from the following detailed description when read in conjunction with the accompanying drawings, in which:

Figure 1 illustrates schematically a general network architecture with a plurality of relays between a source node and a destination node;
Figure 2 illustrates a number of possible relay relocations;
Figure 3 illustrates schematically an embodiment of the method of the invention.

Embodiments of the invention are based on the insight that in a home network the practical usage of a relay device may be limited by its service requirements. Most of the time the relay devices are chosen out of the number of end user devices which are utilized for certain broadband applications (e.g., audio, video, HDTV, www, etc). On the other hand, it is known that the higher data rate (broadband) applications require a higher energy budget. This may be critical issue if such a device is to be selected as a relay. This triggers the issue of efficient energy usage especially for green in-house networks. The rough estimate of total average energy consumption can be expressed as: $E\_tot = N (tx\_bit \cdot E\_tx + rx\_bit \cdot E\_rx + E\_idle)$, where $tx\_bit$, $rx\_bit$, $E\_tx$, $E\_rx$ and $E\_idle$, respectively, denote number of transmit bits, number of receive bits, transmit energy, received energy and the energy in idle periods (without transmission). N denotes the number of relay transmission stages. Thus, when a relay device is selected, it is advantageous to take into account its own service and/or on its energy/power requirements.

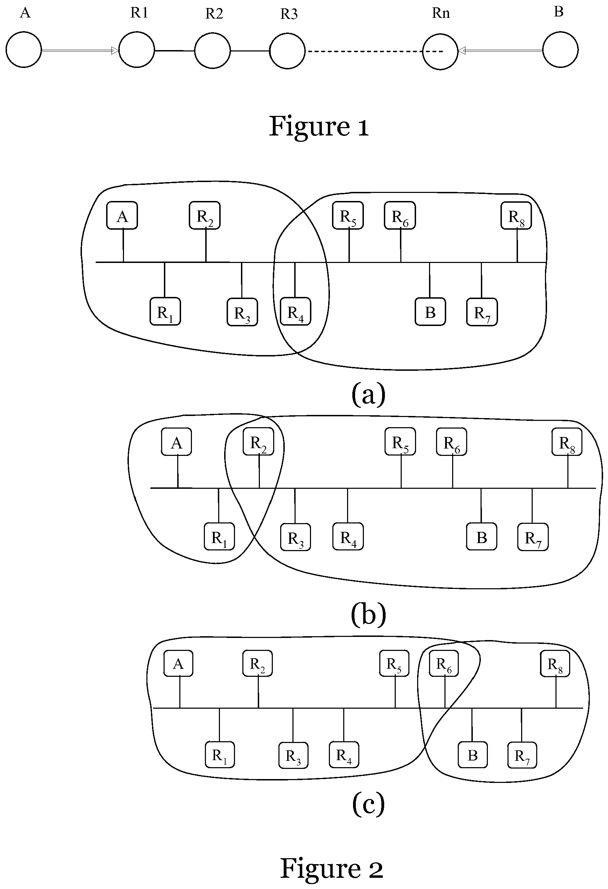

Figure 1 illustrates a general network architecture with n relay devices between a source node A and a destination node B. The selection of multi-hop strategy can be generalized in three categories as: Fixed-Rate (FR); Rate-Adaptive (RA); and Incremental-Redundancy (IR) multi-hop. The selection of multi-hop strategy is not relevant in this application. Embodiments of the invention are concerned with the selection of one or more relay device(s) in a multi-hop communication network. Known techniques may be divided into the following three categories:

1) Fixed selection (FS): the relays are selected to divide the source-to-destination distance approximately evenly regardless of the instantaneous channel conditions. This is a reasonable approach to counter the signal attenuation, which increases with distances, but it neglects effects of multipath propagation.

2) Channel adaptive selection (CAS): a relay is selected at a time with respect to defined network metric based on the progress made towards the destination. This channel adaptive requires location and local link-quality information.

3) Automatic repeat-request selection (ARQS): an opportunistic routing strategy is to select the node that has successfully decoded the source message first as the next relay. This node identifies itself by being the first to send an acknowledgement.

The above relay selection methods have the disadvantage that they do not take into consideration joint service and energy requirement of the relay node, which depends on the distance from the source/destination nodes.

Embodiments of the invention deal with efficient selection of a relay device in service- and power-constrained home networks. The selection of a relay device is based not only on physical layer channel/system information but it also takes into consideration the service and energy requirement of the repeater node.

In an exemplary embodiment of the invention, a communication system where two user equipment devices A and B communicate over one or more relay device(s) in a home network. For the sake of brevity only the selection of a single relay node will be discussed, but the skilled person understands that more than one relay device may be selected using embodiments of the method of the invention.

Figure 2 illustrates examples of relay device location possibilities:

(a) approximately at the middle ($R_4$) between node A and node B;
(b) close to the source node A ($R_2$) ; and
(c) close to the destination node B ($R_6$).

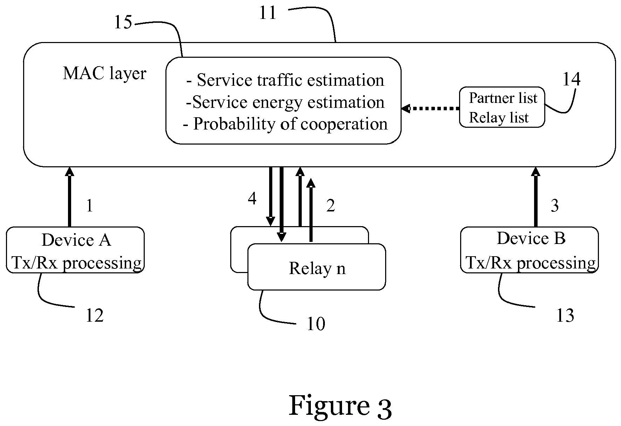

Now an exemplary embodiment of the system and method of the invention will be discussed with reference to figure 3. The system comprises a source node 12, a destination node 13 and a number of intermediate nodes 10 that may function as relay devices. Further the system comprises a master node 11 with a calculation and selection module 15 configured for calculating for each relay device the suitability of that relay device. The exemplary method comprises in essence three stages:

Stage 1

In a first step (see reference numerals 1, 2 and 3 in figure 3), the relay devices 10, 12, 13 report their system parameters (data rates, code rate, bit loading, power, SNR, etc) and/or service/application parameters to a master node 11 in the form of reports. For example, Broadband Forum defined a number of parameters at device level that may be reported. The master node 11 may be a home network management node. Typically there is only one master node 11 per network. This reporting is foreseen by the relevant standards, and hence can be easily implemented. Examples of suitable standards are HomePlug and International Telecommunication Union (ITU) G.hn standards.

Stage 2

In a second step (see figure 3), the required probability of cooperation, the traffic requirement and the energy requirement are estimated based on the collected parameters from the relay devices. This is done in the calculation and selection module 15.

The obtained relay reports comprise a service parameter indicating e.g. the type of device, e.g. laptop, mobile phone, etc. Services may be prioritized for each of the relay nodes, and for relay device n the service priority is denoted as Sn. For example, the service prioritization may be performed such that a higher priority is given to an application with higher data rates. This does not have to be the rule and any type of prioritization can be used.

Also, the required traffic/data rate for each device is estimated. The required traffic/data rate is typically the required instantaneous data rate including both incoming and outgoing traffic. The traffic estimation for relay device n is denoted as Tn. For example, the required traffic/data rate may be estimated through reported network parameters such as the physical transmit data rate (or receive data rate) minus the overhead, being typically about 20% based on current home networking standards. Another possibility is to calculate the theoretical throughput based on the collected signal to noise ratio (SNR) via Shannon's formulae. The skilled person understands that other estimation formulas may be used to calculate the required traffic/data rate.

Based on the estimated traffic information, the power needed to transmit the traffic **Tn** can be estimated using the equation **Pn** = [frequency$^{2.6}$ x **Tn]**. This estimated power value **Pn** is also indicating whether or not the relay device requires the assistance of another relay device for communicating with a destination node. This experimental equation for **Pn** can be summarized as: the higher the data rate is and the higher the frequency is, the higher the power requirement.

In addition, a probability of cooperation is calculated using the collected bit error rate (BER). The probability of cooperation is denoted as **Bn** and may be calculated using the following formula:

$$\mathbf{Bn} = \mathrm{Pr}[\mathrm{PER>K]},$$

where PER denotes the packet error rate and K is a predetermined blocking threshold. PER may be derived from BER as

$$PER = \begin{cases} 1-(1-BER)^n \\ BER = \dfrac{1}{2}\mathrm{erfc}(\sqrt{SNR}) \end{cases},$$

where n denotes the number of bits in a packet.

Stage 3

The selection of a relay device from the plurality of n relay devices is done at a master node 11. The master node will execute the MAC protocol to reserve the signaling intervals and schedule the transmissions, e.g. broadcasting a relay selection message to the plurality of relay devices 10 to indicate the selected relay device.

Based on the estimated values for Sn, Tn, Pn and Bn in stage 2, a suitability function, also called cost function, being an indication of the suitability of the relay device, can be defined as

$$\Theta = \mathrm{f}(\mathrm{Sn,\ Tn,\ Pn,\ Bn})$$

The relay device(s) i for which $\Theta$ is minimal may then be selected as the most suitable relay device(s), provided that Si > Smin, Ti > Tmin, Pi > Pmin and Bi > Bmin, where Smin, Tmin, Pmin and Bmin are minimum values for the respective parameters in order to maintain the reliable communication.

As an example the cost function may be defined as

$$\Theta = \mathrm{Sn}^2.\alpha + \beta\mathrm{Tn}^3 + \gamma\mathrm{Pn}^4 + \delta\mathrm{Bn}^5$$

where $\alpha$, $\beta$, $\chi$ and $\delta$ denote importance factors that can be tuned to cross-correlate between the parameters Sn, Tn, Pn and Bn.

Embodiments of the method can be seen as a multi-dimensional optimization problem, which takes into consideration service requirement Sn, traffic requirement Tn, power requirement Pn and probability of cooperation Bn.

Having determined which relay device is the most suitable candidate, a relay selection message is broadcasted to all nodes, see step 4 in figure 3, but only the selected relay device(s) is (are) flagged for transmission while other relay devices are idle. Such relay selection messages may be sent every time a new selection is performed.

Optionally there may be stored a partner/relay list 14 containing information for the master node 11 about possible partners (such as nodes A and B) as well as potential relay devices in his network. For example, this can be a list from a previous calculation or a list of pre-defined devices that are always used for estimation. For completeness it is noted that some devices may never be used as relays due to their critical functionality, e.g. a PLC node with a connection to a digital TV receiver.

Whilst the principles of the invention have been set out above in connection with specific embodiments, it is to be understood that this description is merely made by way of example and not as a limitation of the scope of protection which is determined by the appended claims.

**Claims**

1. Method for selecting a relay device from a plurality of relay devices (10) in a network, comprising the following steps:

- obtaining (2) from each relay device of said plurality of relay devices (10) a number of parameters associated with the relay device;
- calculating for each relay device of the plurality of relay devices (10) an indication of the suitability of the relay device based on the obtained number of parameters;
- selecting a relay device to be used based on the calculated indications;

**characterized in that** the number of parameters includes a service parameter indicating the type of a relay device, and wherein for each relay device of said plurality of relay devices (10) a service priority value is determined based on the type of relay device, and this service priority value is used to calculate the indication for this relay device.

2. Method of claim 1, wherein the plurality of relay devices (10) comprises at least one of the following: a CPE device, a computer, a mobile phone, a tablet, a smart phone, a set-top box.

3. Method of claim 1 or 2, wherein the network is a home network.

4. Method of any of the previous claims, wherein the number of parameters includes any one or more of the following: a data rate parameter, a bit error rate parameter, a power parameter, an application parameter.

5. Method of claim 4, wherein the number of parameters include a data rate parameter, and wherein for each relay device of said plurality of relay devices (10) a power value representative for the power needed to handle the current data rate through the relay device, is estimated, and this power value is used to calculate the indication for this relay device.

6. Method of any one of the previous claims, wherein for each relay device of said plurality of relay devices (10) a data rate value representative for the instantaneous consumed data rate is estimated using the obtained number of parameters, and this data rate value is used to calculate the indication for this relay device.

7. Method of any one of the previous claims, wherein for each relay device of said plurality of relay devices (10) the obtained number of parameters comprise a bit error rate parameter, and wherein a probability of cooperation value is calculated using the bit error rate parameter, and this probability-of-cooperation value is used to calculate the indication for this relay device.

8. Method of any one of the previous claims, further comprising:

broadcasting (4) a relay selection message to the plurality of relay devices (10) to indicate the selected relay device.

9. System for selecting a relay device from a plurality of relay devices (10) in a network, comprising:

- a master node (11) adapted for obtaining from each relay device of said plurality of relay devices (10) a number of parameters associated with the relay device;
- a calculating and selecting module (15) adapted for calculating for each relay device of the plurality of relay devices (10) an indication of the suitability of the relay device based on the obtained number of parameters; and for selecting a relay device to be used based on the calculated indications;

**characterized in that** the master node (11) is configured for obtaining a service parameter indicating the type of a relay device, and wherein the calculating and selecting module (15) is configured for determining, for each relay device of the plurality of relay devices (10), a service priority value based on the type of relay device, and to calculate the indication for this relay device using the determined service priority value.

10. System of claim 9, further comprising a broadcasting module configured for broadcasting (4) a relay selection message to the plurality of relay devices (10) to indicate the selected relay device.

11. System of claim 9 or 10, wherein the network is a home network.

12. System of any one of the claims 9-11, wherein the plurality of relay devices (10) comprises at least one of the following: a CPE device, a computer, a mobile phone, a tablet, a smart phone, set-top box.

13. System of any one of the claims 9-12, wherein the master node (11) is configured for obtaining a data rate parameter, and wherein the calculating and selecting module (15) is configured for estimating, for each relay device of the plurality of relay devices (10), a power value representative for the power needed to handle the current data rate through this relay device, and to calculate the indication for this relay device using the power value.

**Patentansprüche**

1. Verfahren zur Auswahl einer Relaisvorrichtung aus einer Vielzahl von Relaisvorrichtungen (10) in einem Netzwerk, umfassend folgende Schritte:

   - Erhalten (2) einer Anzahl von Parametern in Verbindung mit der Relaisvorrichtung von jeder Relaisvorrichtung aus der besagten Vielzahl von Relaisvorrichtungen (10);
   - Berechnen, für jede Relaisvorrichtung aus der Vielzahl von Relaisvorrichtungen (10), einer Eignungsangabe der Relaisvorrichtung basierend auf der erhaltenen Anzahl von Parametern;
   - Auswählen einer zu verwendenden Relaisvorrichtung basierend auf den berechneten Angaben;

   **dadurch gekennzeichnet, dass** die Anzahl von Parametern einen Dienstparameter umfasst, der den Typ einer Relaisvorrichtung angibt, und wobei für jede Relaisvorrichtung aus der besagten Vielzahl von Relaisvorrichtungen (10) ein Dienstprioritätswert basierend auf dem Typ der Relaisvorrichtung bestimmt wird, und dieser Dienstprioritätswert verwendet wird, um die Angabe für diese Relaisvorrichtung zu berechnen.

2. Verfahren nach Anspruch 1, wobei die Vielzahl von Relaisvorrichtungen (10) mindestens eines aus Folgendem umfasst: ein CPE-Gerät, einen Computer, ein Mobiltelefon, ein Tablet, ein Smartphone, eine Settop-Box.

3. Verfahren nach Anspruch 1 oder 2, wobei das Netzwerk ein Heimnetzwerk ist.

4. Verfahren nach einem beliebigen der vorstehenden Ansprüche, wobei die Anzahl von Parametern einen oder mehrere beliebige der Folgenden umfasst: einen Datenrate-Parameter, einen Bitfehlerrate-Parameter, einen Leistungsparameter, einen Anwendungsparameter.

5. Verfahren nach Anspruch 4, wobei die Anzahl von Parametern einen Datenrate-Parameter umfasst, und wobei für jede Relaisvorrichtung aus der besagten Vielzahl von Relaisvorrichtungen (10) ein Leistungswert geschätzt wird, der bezeichnend ist für die Leistung, die erforderlich ist, um die aktuelle Datenrate über die Relaisvorrichtung zu bewältigen, und dieser Leistungswert verwendet wird, um die Angabe für diese Relaisvorrichtung zu berechnen.

6. Verfahren nach einem beliebigen der vorstehenden Ansprüche, wobei für jede Relaisvorrichtung aus der besagten Vielzahl von Relaisvorrichtungen (10) ein Datenratewert, der bezeichnend ist für die momentan verbrauchte Datenrate, unter Verwendung der erhaltenen Anzahl von Parametern geschätzt wird, und dieser Datenratewert verwendet wird, um die Angabe für diese Relaisvorrichtung zu berechnen.

7. Verfahren nach einem beliebigen der vorstehenden Ansprüche, wobei für jede Relaisvorrichtung aus der besagten Vielzahl von Relaisvorrichtungen (10) die erhaltene Anzahl von Parametern einen Bitfehlerrate-Parameter umfasst, und wobei ein Kooperationswahrscheinlichkeitswert unter Verwendung des Bitfehlerrate-Parameters berechnet wird, und dieser Kooperationswahrscheinlichkeitswert verwendet wird, um die Angabe für diese Relaisvorrichtung zu berechnen.

8. Verfahren nach einem beliebigen der vorstehenden Ansprüche, weiterhin umfassend:

   Rundsenden (4) einer Relaisauswahlnachricht an die Vielzahl von Relaisvorrichtungen (10), um die ausgewählte Relaisvorrichtung anzugeben.

9. System zur Auswahl einer Relaisvorrichtung aus einer Vielzahl von Relaisvorrichtungen (10) in einem Netzwerk, umfassend:

   - einen Master-Knoten (11), der angepasst ist zum Erhalten einer Anzahl von Parametern in Verbindung mit der Relaisvorrichtung von jeder Relaisvorrichtung aus der besagten Vielzahl von Relaisvorrichtungen (10);
   - ein Rechen- und Auswahlmodul (15), das angepasst ist zum Berechnen, für jede Relaisvorrichtung aus der Vielzahl von Relaisvorrichtungen (10), einer Eignungsangabe der Relaisvorrichtung basierend auf der erhaltenen Anzahl von Parametern; und zum Auswählen einer zu verwendenden Relaisvorrichtung basierend auf den berechneten Angaben;

**dadurch gekennzeichnet, dass** der Master-Knoten (11) konfiguriert ist, um einen Dienstparameter zu erhalten, der den Typ einer Relaisvorrichtung angibt, und wobei das Rechen- und Auswahlmodul (15) konfiguriert ist, um für jede Relaisvorrichtung aus der besagten Vielzahl von Relaisvorrichtungen (10) einen Dienstprioritätswert basierend auf dem Typ der Relaisvorrichtung zu bestimmen, und um die Angabe für diese Relaisvorrichtung unter Verwendung des bestimmten Dienstprioritätswerts zu berechnen.

10. System nach Anspruch 9, weiterhin umfassend ein Rundsendemodul, das zum Rundsenden (4) einer Relaisauswahlnachricht an die Vielzahl von Relaisvorrichtungen (10) konfiguriert ist, um die ausgewählte Relaisvorrichtung anzugeben.

11. System nach Anspruch 9 oder 10, wobei das Netzwerk ein Heimnetzwerk ist.

12. System nach einem beliebigen der Ansprüche 9 bis 11, wobei die Vielzahl von Relaisvorrichtungen (10) mindestens eines aus Folgendem umfasst: ein CPE-Gerät, einen Computer, ein Mobiltelefon, ein Tablet, ein Smartphone, eine Settop-Box.

13. System nach einem beliebigen der Ansprüche 9 bis 12, wobei der Master-Knoten (11) konfiguriert ist zum Erhalten eines Datenrate-Parameters, und wobei das Rechen- und Auswahlmodul (15) konfiguriert ist zum Schätzen, für jede Relaisvorrichtung aus der Vielzahl von Relaisvorrichtungen (10), eines Leistungswerts, der bezeichnend ist für die Leistung, die erforderlich ist, um die aktuelle Datenrate über diese Relaisvorrichtung zu bewältigen, und um die Angabe für diese Relaisvorrichtung unter Verwendung des Leistungswerts zu berechnen.

## Revendications

1. Procédé pour sélectionner un dispositif de relais parmi une pluralité de dispositifs de relais (10) dans un réseau, comprenant les étapes suivantes :

   - obtenir (2) à partir de chaque dispositif de relais de ladite pluralité de dispositifs de relais (10) un nombre de paramètres associés au dispositif de relais ;
   - calculer pour chaque dispositif de relais de la pluralité de dispositifs de relais (10) une indication de l'adéquation du dispositif de relais sur la base du nombre de paramètres obtenu ;
   - sélectionner un dispositif de relais à utiliser sur la base des indications calculées ;

   **caractérisé en ce que** le nombre de paramètres inclut un paramètre de service indiquant le type d'un dispositif de relais, et pour chaque dispositif de relais de ladite pluralité de dispositifs de relais (10), une valeur de priorité de service étant déterminée sur la base du type de dispositif de relais, et cette valeur de priorité de service étant utilisée pour calculer l'indication pour ce dispositif de relais.

2. Procédé selon la revendication 1, dans lequel la pluralité de dispositifs de relais (10) comprend au moins un de ce qui suit : un dispositif de CPE, un ordinateur, un téléphone mobile, une tablette, un téléphone intelligent, un boîtier décodeur.

3. Procédé selon la revendication 1 ou 2, dans lequel le réseau est un réseau domestique.

4. Procédé selon l'une quelconque des revendications précédentes, dans lequel le nombre de paramètres inclut l'un quelconque ou plusieurs de ce qui suit : un paramètre de débit de données, un paramètre de taux d'erreur binaire, un paramètre de puissance, un paramètre d'application.

5. Procédé selon la revendication 4, dans lequel le nombre de paramètres inclut un paramètre de débit de données, et dans lequel pour chaque dispositif de relais de ladite pluralité de dispositifs de relais (10), une valeur de puissance représentative de la puissance nécessaire pour prendre en charge le débit de données actuel par l'intermédiaire du dispositif de relais, est estimée, et cette valeur de puissance est utilisée pour calculer l'indication pour ce dispositif de relais.

**6.** Procédé selon l'une quelconque des revendications précédentes, dans lequel pour chaque dispositif de relais de ladite pluralité de dispositifs de relais (10), une valeur de débit de données représentative du débit de données consommé instantané est estimée en utilisant le nombre de paramètres obtenu, et cette valeur de débit de données est utilisée pour calculer l'indication pour ce dispositif de relais.

**7.** Procédé selon l'une quelconque des revendications précédentes, dans lequel pour chaque dispositif de relais de ladite pluralité de dispositifs de relais (10), le nombre de paramètres obtenu comprend un paramètre de taux d'erreur binaire, et dans lequel une valeur de probabilité de coopération est calculée en utilisant le paramètre de taux d'erreur binaire, et cette valeur de probabilité de coopération est utilisée pour calculer l'indication pour ce dispositif de relais.

**8.** Procédé selon l'une quelconque des revendications précédentes, comprenant en outre l'étape suivante :

diffuser (4) un message de sélection de relais à la pluralité de dispositifs de relais (10) pour indiquer le dispositif de relais sélectionné.

**9.** Système pour sélectionner un dispositif de relais parmi une pluralité de dispositifs de relais (10) dans un réseau, comprenant :

- un noeud maître (11) adapté pour obtenir à partir de chaque dispositif de relais de ladite pluralité de dispositifs de relais (10) un nombre de paramètres associés au dispositif de relais ;
- un module de calcul et de sélection (15) adapté pour calculer pour chaque dispositif de relais de la pluralité de dispositifs de relais (10) une indication de l'adéquation du dispositif de relais sur la base du nombre de paramètres obtenu ; et pour sélectionner un dispositif de relais à utiliser sur la base des indications calculées ;

**caractérisé en ce que** le noeud maître (11) est configuré pour obtenir un paramètre de service indiquant le type d'un dispositif de relais, et le module de calcul et de sélection (15) étant configuré pour déterminer, pour chaque dispositif de relais de la pluralité de dispositifs de relais (10), une valeur de priorité de service sur la base du type de dispositif de relais, et pour calculer l'indication pour ce dispositif de relais en utilisant la valeur de priorité de service déterminée.

**10.** Système selon la revendication 9, comprenant en outre un module de diffusion configuré pour diffuser (4) un message de sélection de relais à la pluralité de dispositifs de relais (10) pour indiquer le dispositif de relais sélectionné.

**11.** Système selon la revendication 9 ou 10, dans lequel le réseau est un réseau domestique.

**12.** Système selon l'une quelconque des revendications 9 à 11, dans lequel la pluralité de dispositifs de relais (10) comprend au moins un de ce qui suit : un dispositif de CPE, un ordinateur, un téléphone mobile, une tablette, un téléphone intelligent, un boîtier décodeur.

**13.** Système selon l'une quelconque des revendications 9 à 12, dans lequel le noeud maître (11) est configuré pour obtenir un paramètre de débit de données, et dans lequel le module de calcul et de sélection (15) est configuré pour estimer, pour chaque dispositif de relais de la pluralité de dispositifs de relais (10), une valeur de puissance représentative de la puissance nécessaire pour prendre en charge le débit de données actuel par l'intermédiaire de ce dispositif de relais, et pour calculer l'indication pour ce dispositif de relais en utilisant la valeur de puissance.

## Figure 1

(a)

(b)

(c)

## Figure 2

15 — 11

MAC layer

- Service traffic estimation
-Service energy estimation
- Probability of cooperation

Partner list
Relay list

14

| Device A
Tx/Rx processing |

1

| Relay n |

4    2

| Device B
Tx/Rx processing |

3

12

10

13

## Figure 3

**EP 2 782 293 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5029334 A
- US 2008144512 A1